# NOUVEAU FASCICULE DE BREVET EUROPEEN

(11) **EP 1 368 149 B2**
(45) Date de publication et mention de la décision concernant l'opposition: **11.11.2009**
(45) Mention de la délivrance du brevet: 26.05.2004
(21) Numéro de dépôt: 02711742.3
(22) Date de dépôt: 26.02.2002
(51) Int. Cl.: B23B 27/08

(54) **OUTIL DE COUPE**
SCHNEIDWERKZEUG
CUTTING TOOL

(30) Priorité: 13.03.2001 EP 01810254
(43) Date de publication de la demande: 10.12.2003
(73) Titulaire: Applitec Moutier S.A., 2740 Moutier (CH)
(72) Inventeur: CHAMPION, François, CH-2740 Moutier (CH)
(74) Mandataire: GLN
(86) Numéro de dépôt international: PCT/CH2002/000113
(87) Numéro de publication internationale: WO 2002/072300

(56) Documents cités:
- WO-A-01/00360
- FR-A- 2 431 897
- US-A- 5 360 298
- US-A- 5 555 784
- US-A- 5 924 826
- US-A- 5 931 613

## Description

La présente invention se rapporte aux outils de coupe à plaquette rapportée. Elle concerne tout particulièrement un outil de coupe comportant un porte-outil muni d'une assise, une plaquette d'usinage en matériau fritté et munie d'une base destinée à coopérer avec l'assise pour assurer le positionnement de la plaquette sur le porte-outil, et des moyens de fixation de la plaquette sur le porte-outil. Dans cet outil, l'assise et la base présentent chacune une structure à orientation longitudinale formée de sillons disposés parallèlement les uns aux autres et de formes complémentaires pour permettre l'engagement des structures l'une dans l'autre. Un outil selon le préambule de la revendication 1 est décrit par exemple dans WO-A-01/00360.

Les plaquettes en matériau fritté, tel qu'un carbure de tungstène, supportent de hautes températures sans que leurs caractéristiques physiques n'en soient affectées. Il est ainsi possible de travailler à de grandes vitesses de coupes et avec des passes importantes. Ces matériaux sont malheureusement fragiles et relativement coûteux. C'est pourquoi le porte-outil est formé dans un autre type de matériau, par exemple de l'acier, qui est plus élastique, plus facilement usinable et de moindre coût.

La plaquette est fixée par sa base sur l'assise du porte-outil, au moyen d'une ou de deux vis engagées dans des trous pratiqués dans la plaquette et dans le porte-outil, pour les rendre solidaires l'un de l'autre.

Ces outils sont fréquemment utilisés sur des machines de production industrielle dont l'entretien doit pouvoir se faire dans les délais les plus brefs. C'est pourquoi ils comportent des moyens de positionnement permettant d'assurer la précision de la fixation de la plaquette sur le porte-outil par l'engagement des structures l'une dans l'autre. Ainsi, les vis appliquent les sillons de la base dans les sillons de l'assise, de manière à orienter et maintenir en place la plaquette sur le porte-outil.

Afin de garantir des conditions d'usinage optimales, les surfaces de coupes et la base sont rectifiées. La rectification des surfaces de coupe est nécessaire pour obtenir la précision et les états de surface désirés.

La rectification de la base permet d'assurer un placage de la plaquette sur le porte-outil, en garantissant que ses sillons sont en contact sur toute leur longueur avec ceux de l'assise, ce qu'une plaquette issue de frittage ne peut assurer. En effet, même en utilisant un moule parfaitement usiné, il se peut que la plaquette se déforme légèrement lors de l'opération de frittage. Cela est particulièrement préjudiciable lorsque la déformation rend la plaquette convexe et que seule la partie médiane de la base est en contact avec l'assise. Dans ce cas, la position de la zone active de la plaquette ne peut être garantie, la hauteur variant selon que c'est l'une ou l'autre des vis qui est serrée en premier.

Lorsque l'outil ne comporte qu'une vis, il y a alors un risque important de vibrations, ce qui limite considérablement la vitesse de coupe et réduit la durée de vie de la plaquette. Or, cette opération de rectification de la base participe de manière sensible au coût de la plaquette.

La présente invention a pour but de permettre une simplification de la fabrication de tels outils. L'outil selon l'invention est décrit dans la revendication 1.

La concavité peut être obtenue directement lors de l'opération de moulage, sans devoir effectuer d'usinage complémentaire.

La pratique a montré qu'une concavité définie par une flèche de l'ordre de 0,2% de la longueur de la structure était suffisante pour obtenir l'effet escompté.

Pour assurer la fixation de la plaquette sur le porte-outil, ces derniers comprennent chacun deux trous cylindriques dont les axes sont respectivement perpendiculaires à la base et à l'assise et alignés en référence aux sillons. Les moyens de fixation sont alors formés par deux vis engagées chacune dans l'un des trous de la plaquette et du porte-outil.

Les têtes des vis sont de type conique et les trous que comporte la plaquette comprennent une portion conique agencée pour coopérer avec les têtes de vis, afin de positionner longitudinalement la plaquette sur le porte-outil.

De manière avantageuse, les axes des trous sont distants l'un de l'autre d'une valeur sensiblement égale à la moitié de la longueur de la structure de la base, et disposés symétriquement par rapport au point médian de cette dernière.

La pratique a montré qu'en ayant une plaquette dont la base présente une surface venue de frittage, sa tenue sur le porte-outil est augmentée, à cause de la rugosité plus élevée et, en conséquence du coefficient de frottement plus important ainsi obtenu.

D'autres avantages et caractéristiques de l'invention ressortiront de la description qui va suivre, faite en regard du dessin annexé, dans lequel:
- La figure 1 montre, en éclaté, un outil selon l'invention;
- La figure 2 représente le porte-outil en trait plein et la plaquette en pointillés, avec indication des zones de contact; et
- La figure 3 est une vue de côté du porte-outil et de la plaquette, éloignés l'un de l'autre.

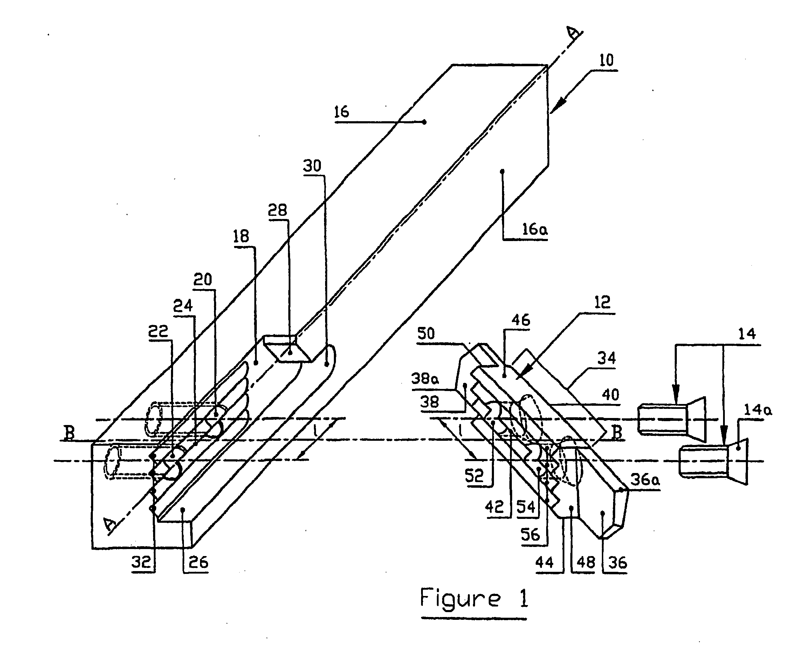

L'outil représenté à la figure 1 comprend un porte-outil 10, une plaquette 12 en matériau fritté, par exemple en carbure de tungstène, et des vis 14, à tête conique 14a, servant de moyens de fixation de la plaquette 12 sur le porte-outil 10.

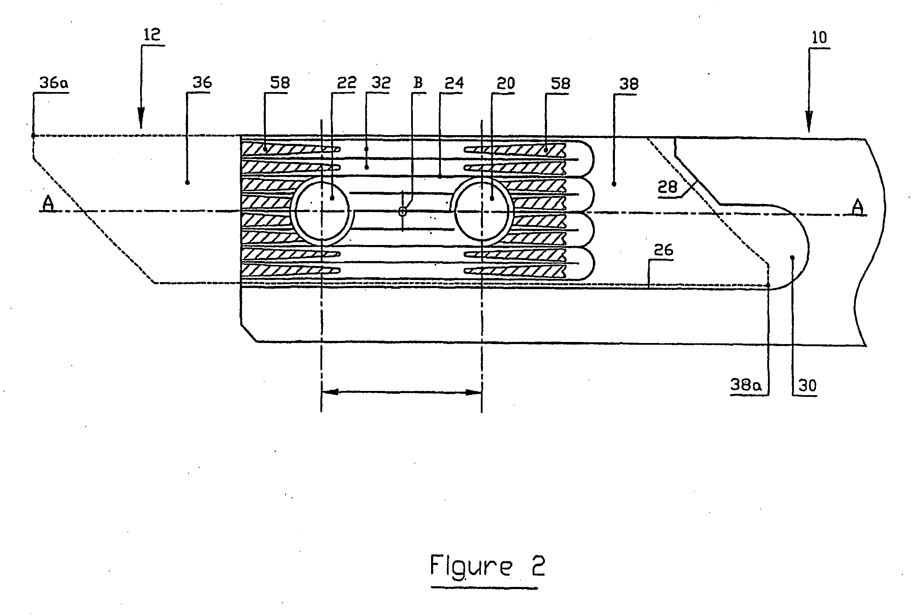

Le porte-outil 10 est formé d'un corps 16 parallélépipédique, dont une face 16a comporte un dégagement pratiqué dans l'un de ses coins et tenant lieu de réceptacle 18. Deux trous taraudés 20 et 22, destinés à recevoir les vis 14, traversent le corps 16 de part en part et débouchent dans le réceptacle 18. Ils sont distants l'un de l'autre d'une valeur l. Un axe longitudinal A-A est représenté sur les figures 1 et 2, coupant perpendiculairement les axes des trous 20 et 22.

Le réceptacle 18 comporte un fond dont la surface est parallèle à la face 16a et qui définit une assise 24. Il comporte, en outre, des parois 26 et 28 perpendiculaires à la face 16a et une gorge 30 séparant les parois 26 et 28.

L'assise 24 présente une structure à orientation longitudinale, formée de sillons 32 disposés parallèlement les uns aux autres et occupant toute sa largeur. Les sillons 32 sont disposés symétriquement par rapport à un plan perpendiculaire à l'assise 24 et passant par l'axe A-A. Ils ont une section isocèle, dont l'angle au sommet est sensiblement droit, l'arête étant coupée.

La paroi 28 se trouve dans le prolongement des sillons 32 et forme avec l'axe A-A un angle d'environ 45°. Les fonctions de cette paroi et de la gorge 30 seront précisées plus loin.

Le corps 16 du porte-outil 10 est avantageusement fabriqué en acier pour outils, par exemple un acier au soufre manganèse et plomb, puis cémenté et noirci selon les procédés bien connus de l'homme du métier.

La plaquette d'usinage 12 est de forme générale prismatique. Elle comprend plus particulièrement un coeur 34 et deux ailes 36 et 38. Le coeur 34 est parallélépipédique, avec une face supérieure 40, une base 42, deux côtés latéraux 44 et 46 et deux côtés frontaux 48 et 50. Les ailes 36 et 38 sont respectivement solidaires des côtés frontaux 48 et 50 et les prolongent.

Le coeur 34 est percé de deux trous 52 et 54 distants l'un de l'autre d'une valeur l égale à celle séparant les deux trous 20 et 22, et dont les axes sont perpendiculaires à la face 40 et à la base 42. Ces trous 52 et 54 comportent une partie cylindrique et une partie conique, respectivement identifiées par les lettres a et b, la partie conique b étant ouverte sur la face supérieure 40. Pour faciliter la lecture du dessin, un axe B-B est représenté, parallèle aux axes des trous 52 et 54 et disposé à mi-distance entre eux.

Les ailes 36 et 38, et plus particulièrement leurs extrémités en forme d'arête 36a et 38a constituent les parties actives de la plaquette 12. Elles font, en général, l'objet d'opérations de rectification, pour définir leur forme avec la précision que nécessitent les opérations d'usinage à effectuer.

En général, les deux ailes. 36 et 38 sont identique, de telle sorte que la plaquette 12 a une structure symétrique par rapport à l'axe B-B. Elle est dimensionnée de manière à ce que, lorsqu'elle est disposée dans le réceptacle 18, l'aile 36 déborde du porte-outil 10. Son arête de coupe 36a peut alors être engagée dans une pièce à usiner. L'aile 38 est, par contre, disposée à l'intérieur du réceptacle 18, son arête de coupe 38a étant disposée dans la gorge 30, sans contact avec le porte-outil 10. Elle est ainsi protégée.

Lorsque l'arête de coupe 36a de l'aile 36 est usée, il suffit de retirer les vis 14 et de tourner la plaquette 12 de 180° autour de l'axe B-B de manière que l'aile 38 prenne la place de l'aile 36, puis de remettre les vis 14, l'arête de coupe 38a étant alors fonctionnelle.

Pour assurer le positionnement de la plaquette 12 sur le porte-outil 10, la base 42 présente une structure à orientation longitudinale, formée de sillons 56 parallèles les uns aux autres et de forme complémentaire aux sillons 32, de manière à ce qu'ils soient engagés les uns dans les autres. Les vis 14 peuvent alors être engagées dans les trous 20 et 52, respectivement 22 et 54. Les têtes coniques 14a des vis 14 coopèrent avec les portions coniques 52b et 54b des trous 52 et 54, ce qui garantit le positionnement longitudinal de la plaquette 12 et assure une liaison rigide entre elle et le porte-outil 10.

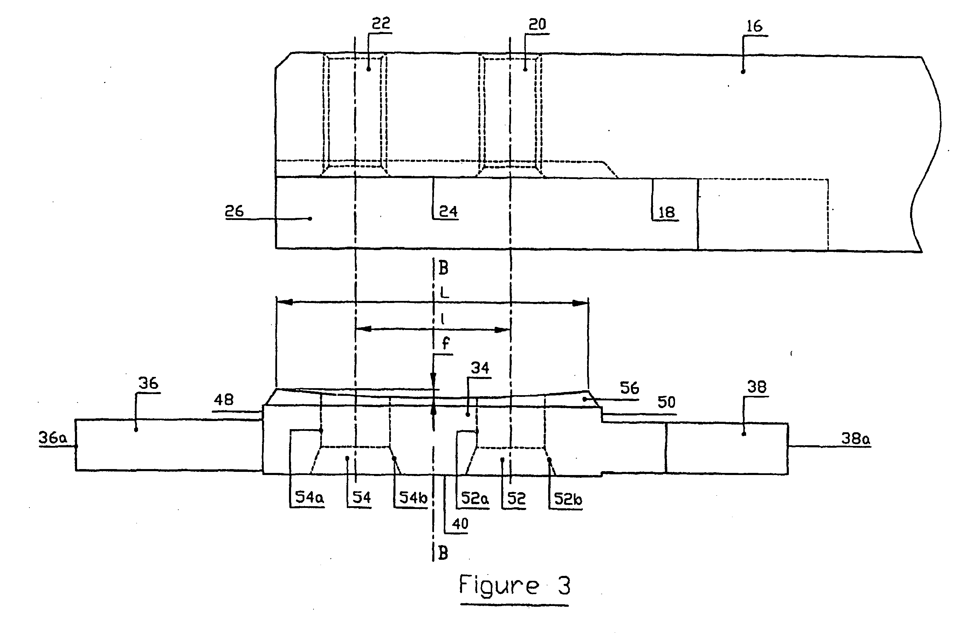

Comme on peut le voir sur la figure 3, la structure que forment les sillons 56 s'étend sur une longueur L sensiblement égale à 2l répartie de manière symétrique par rapport à l'axe B-B. Elle présente une forme concave dont la flèche f, exagérée sur le dessin afin de a rendre visible, est de l'ordre de 0,002L. Ainsi, avec un outil dans lequel L est égal à 20 mm, la flèche sera avantageusement de 0,04 mm, ce qui correspond sensiblement à la précision de la planéité pouvant être garantie par frittage. En d'autres termes, dans la pratique, la flèche est comprise entre 0 et 0,08 mm. De la sorte, il est possible d'assurer une parfaite tenue de la plaquette 12 sur le porte-outil 10.

La figure 2 montre comment les sillons 32 sont en contact avec les sillons 56, pour une plaquette présentant la plus grande concavité admise dans la tolérance, les zones de contact 58 étant hachurées. Sur cette figure, la plaquette est représentée en pointillés. On constate que ces zones 58 s'étendent des extrémités des sillons 32 jusqu'au-delà des axes des trous 20 et 22. En d'autres termes, les vis 14 appliquent leur force de fixation dans une zone où la plaquette 12 est en contact avec le porte-outil 10. Une telle disposition est plus avantageuse qu'avec une seule vis, médiane, car elle permet d'éviter de trop grandes tensions dans la plaquette 12, qui pourraient provoquer sa rupture. Ce problème ne se pose pas lorsque la plaquette est très épaisse.

Avec une telle configuration, il n'est plus nécessaire de rectifier la base 42 de la plaquette 12. De la sorte, cette base 42 présente une surface venue de frittage. L'expérience a montré qu'une telle surface présente un coefficient de frottement sensiblement plus élevé qu'une surface rectifiée. Il en résulte que, malgré le fait que la plaquette 12 n'est pas en contact, sur toute la surface de sa base 42, avec l'assise 24, la rigidité de l'outil est au moins égale, voire supérieure à celle obtenue avec une plaquette dont la base est rectifiée.

La description faite ci-dessus se rapporte à un burin tel que ceux utilisés dans le décolletage. Il va de soi que le même principe pourrait être utilisé pour d'autre types de burins ainsi que pour des fraises.

## Revendications

1. Outil de coupe comportant un porte-outil (10) muni d'une assise (24), une plaquette d'usinage (12) en matériau fritté, munie d'une base (42) destinée à coopérer avec ladite assise (24) pour assurer le positionnement de la plaquette (12) sur le porte-outil (10), et des moyens de fixation (14) de la plaquette sur le porte-outil , dans lequel ladite assise (24) et ladite base (42) présentent chacune une structure à orientation longitudinale formée de sillons jointifs de section isocèle d'angle au sommet sensiblement droit (32, 56) disposés parallèlement les uns aux autres et de formes complémentaires pour permettre l'engagement des structures l'une dans l'autre, lesdits sillons (56) de la plaquette (12) occupant toute la largeur et longueur de la base (42) de la plaquette (12), lesdits sillons (32) de l'assise (24) occupant toute la largeur de l'assise (24), l'arête des sillons (32) de l'assise (24) étant coupée,
**caractérisé en ce que** la base (42) de ladite plaquette (12) présente une surface venue de frittage,
et **en ce que** la structure de la plaquette (12) présente une concavité dans le sens longitudinal, de manière à ce que toutes les extrémités des sillons (32, 56) des deux structures soient en contact les unes avec les autres dans des zones (58) situées sur les deux flancs des sillons (32) de l'assise.

2. Outil selon la revendication 1, **caractérisé en ce que** ladite concavité est définie par une flèche (d) de l'ordre de 0,2% de la longueur (L) de ladite structure.

3. Outil selon l'une des revendications 1 et 2, **caractérisé en ce que** la plaquette (12) et le porte-outil (10) comprennent chacun deux trous cylindriques (52, 54) dont les axes sont respectivement perpendiculaires à la base (42) et à l'assise (24) et alignés en référence auxdits sillons, et **en ce que** lesdits moyens de fixation sont formés par deux vis (14) engagées chacune dans l'un des trous de la plaquette (12) et du porte-outil (10) dans les zones de contact (58) où la plaquette est en contact avec le porte-outil.

4. Outil selon la revendication 3, **caractérisé en ce que** les têtes (14a) des vis (14) sont de type conique et les trous (52, 54) que comporte la plaquette comprennent une portion conique (52b, 54b) agencée pour coopérer avec les têtes (14a) de vis, afin de positionner longitudinalement la plaquette (12) sur ledit porte-outil (10).

5. Outil selon l'une des revendications 3 et 4, **caractérisé en ce que** les axes desdits trous (52, 54) sont distants l'un de l'autre d'une valeur (I) sensiblement égale à la moitié de la longueur (L) de la structure de ladite base (42) et disposés symétriquement par rapport au point médian de cette structure.

## Claims

1. A cutting tool comprising a tool holder (10) provided with a bearing surface (24), a machining insert (12) in a sintered material, provided with a base (42) designed to cooperate with said bearing surface (24) in order to ensure positioning of the insert (12) on the tool holder (10), and means (14) for fixing the insert on the tool holder, in which said bearing surface (24) and said base (42) each have a structure with a longitudinal orientation made up of contiguous grooves with isosceles sections having a substantially right point angle (32, 56) arranged parallel to each other and having complementary shapes so as to enable the engagement of the structures in one another,
**characterized in that** the base (42) of said insert (12) has a surface formed directly by sintering,
and **in that** the structure of the insert (12) has a concavity in the longitudinal direction, such that all of the ends of the grooves (32, 56) of the two structures are in contact with each other.

2. The tool according to claim 1, **characterized in that** said concavity is defined by a deflection (d) of the order of 0.2% of the length (L) of said structure.

3. The tool according to one of claims 1 and 2, **characterized in that** the insert (12) and the tool holder (10) each comprise two cylindrical holes (52, 54 and 20, 22) whereof the axes are perpendicular to the base (42) and the bearing surface (24), respectively, and aligned in reference to said grooves, and **in that** said fixing means are formed by two screws (14) each engaged in one of the holes of the insert (12) and the tool holder (10) in contact zones (58) where the insert is in contact with the tool holder.

4. The tool according to claim 3, **characterized in that** the heads (14a) of the screws (14) are of the conical type and the holes (52, 54) comprised by the insert include a conical portion (52b, 54b) arranged in order to cooperate with the screw heads (14a), in order to position the insert (12) longitudinally on said tool holder (10).

5. The tool according to one of claims 3 and 4, **characterized in that** the axes of said holes (52, 54) are distant from each other by a value (I) essentially equal to half the length (L) of the structure of said base (42) and arranged symmetrically in relation to the median point of this structure.

## Patentansprüche

1. Schneidwerkzeug mit einem mit einer Grundplatte (24) versehenem Werkzeugträger (10), einer aus Sinterwerkstoff bestehenden Bearbeitungsplatte (12), die mit einer Basis (42) versehen ist, die mit der Grundplatte (24) dahingehend zusammenwirken soll, die Positionierung der Platte (12) am Werkzeugträger (10) zu gewährleisten, und Mitteln zur Befestigung (14) der Platte am Werkzeugträger, wobei die Grundplatte (24) und die Basis (42) jeweils eine in Längsrichtung ausgerichtete Konstruktion aufweisen, die mit fugendichten Rillen mit einem Querschnitt in gleichschenkligem Winkel an der etwa geraden Spitze (32, 56) ausgebildet ist, welche parallel zueinander und auf komplementäre Weise angeordnet sind, um den gegenseitigen Eingriff der Konstruktionen zu gestatten,
**dadurch gekennzeichnet, dass** die Basis (42) der Platte (12) eine durch Sintern einstückig ausgebildete Fläche aufweist,
und **dadurch**, dass die Struktur der Platte (12) in Längsrichtung eine Konkavität aufweist, so dass alle Enden der Rillen (32, 56) der beiden Konstruktionen miteinander in Kontakt stehen.

2. Werkzeug nach Anspruch 1, **dadurch gekennzeichnet, dass** die Konkavität durch eine Durchbiegung (d) in einem Bereich von 0,2 % der Länge (L) der Konstruktion definiert wird.

3. Werkzeug nach einem der Ansprüche 1 und 2, **dadurch gekennzeichnet, dass** die Platte (12) und der Werkzeugträger (10) jeweils zwei zylindrische Löcher (52, 54 und 20, 22) aufweisen, deren Achsen jeweils senkrecht zur Basis (42) und Grundplatte (24) verlaufen und entsprechend der Rillen ausgerichtet sind und dass die Befestigungsmittel durch zwei Schrauben (14) gebildet werden, die jeweils in eines der Löcher der Platte (12) und des Werkzeugträgers (10) eingreifen in den Kontaktbereichen (58), wo die Platte mit dem Werkzeugträger im Kontakt ist.

4. Werkzeug nach Anspruch 3, **dadurch gekennzeichnet, dass** die Köpfe (14a) der Schrauben (14) konischer Art sind und die Löcher (52, 54), die die Platte aufweist, einen konischen Teil (52b, 54b) umfassen, der zum Zusammenwirken mit den Köpfen (14a) der Schrauben ausgebildet ist, um die Platte (12) in Längsrichtung am Werkzeugträger (10) zu positionieren.

5. Werkzeug nach einem der Ansprüche 3 und 4, **dadurch gekennzeichnet, dass** die Achse der Löcher (52, 54) um einen Wert (I) voneinander entfernt sind, der im wesentlichen gleich der Hälfte der Länge (L) der Konstruktion der Basis (42) ist und symmetrisch zum Mittelpunkt dieser Konstruktion angeordnet ist.
